# EUROPÄISCHE PATENTSCHRIFT

(11) **EP 0 462 053 B1**
(45) Veröffentlichungstag und Bekanntmachung des Hinweises auf die Patenterteilung: **15.01.1997**
(21) Anmeldenummer: 91810401.9
(22) Anmeldetag: 28.05.1991
(51) Int. Cl.: C08L 63/00, C08L 61/20

(54) **Pulverförmige frei fliessende Epoxidharzzusammensetzungen**
Free flowing epoxy powder compositions
Compositions sous forme de poudre à base de résines époxydes, s'écoulant librement.

(30) Priorität: 05.06.1990 CH 1878/90
(43) Veröffentlichungstag der Anmeldung: 18.12.1991
(73) Patentinhaber: Ciba SC Holding AG, 4057 Basel (CH)
(72) Erfinder: Renner, Alfred, Dr., CH-3286 Muntelier (CH); Cotting, Jacques-Alain, Dr., CH-1729 Bonnefontaine (CH)

(56) Entgegenhaltungen:
- EP-A- 0 152 575
- DE-A- 1 569 326
- US-A- 3 274 026
- US-A- 3 943 080

## Beschreibung

Die vorliegende Erfindung betrifft Zusammensetzungen enthaltend Epoxidharze und feste kolloidale Kondensationspolymere aus Harnstoff oder Melamin und Formaldehyd, Verfahren zur Herstellung von gehärteten Produkten unter Verwendung dieser Zusammensetzungen und Verwendung dieser Zusammensetzungen.

Epoxidharzzusammensetzungen für mannigfaltige Anwendungen und Technologien sind dem Fachmann allgemein bekannt. Der Einsatz flüssiger Epoxidharze ist jedoch für bestimmte Anwendungen, beispielsweise in der Pulverlack- und Pressmassentechnologie, nicht möglich oder mit erheblichen Schwierigkeiten verbunden. So hat es nicht an Versuchen gefehlt, eine Verfestigung von flüssigen Epoxidharzen zu erreichen. Beispielsweise werden in der EP-Patentschrift 38 292 unter anderem flüssige Epoxidharze mit Hilfe von mineralischen Füllstoffen in rieselfähige Mischungen umgewandelt. Die Konsistenz dieser Mischungen genügt jedoch nicht in jeder Hinsicht den hohen Anforderungen, da die Materialien zumeist in Krümelform anfallen. Ausserdem bedingt der hohe Füllstoffanteil ein hohes Gewicht dieser Materialien.

Feste kolloidale Kondensationspolymere aus Harnstoff oder Melamin und Formaldehyd sind dem Fachmann beispielsweise aus Makromol. Chem. **120**, 68 (1968) und aus Makromol. Chem. **149**, 1 (1971) bekannt. Diese Kondensationspolymere finden zum Beispiel als Weisspigmente bei der Papierherstellung und als Verstärkungen von Elastomeren Verwendung. Weiterhin eignen sich die Polymeren für die Abwasserreinigung und für Verwendungen in der Agrarchemie.

Es wurde nun gefunden, dass flüssige und halbfeste Epoxidharze mit Hilfe von kolloidalen Kondensationspolymeren aus Harnstoff oder Melamin und Formaldehyd in frei fliessende, nicht zusammenbackende Pulver umgewandelt werden können.

Gegenstand der vorliegenden Erfindung sind daher pulverförmige, frei fliessende Zusammensetzungen bestehend aus
A) flüssigen oder halbfesten Epoxidharzen und
B) festen kolloidalen Kondensationspolymeren aus Harnstoff oder Melamin und Formaldehyd mit einem Porenvolumen von grösser als 1 cm³/g und einer spezifischen Oberfläche von grösser als 5 m²/g, wobei das Gewichtsverhältnis von Komponente A zu Komponente B 3,5 - 0,6 : 1 ist.

Bevorzugt sind Epoxidharze mit einem Erweichungspunkt unterhalb von 40 °C.

Bei den flüssigen und halbfesten Epoxidharzen, die in den erfindungsgemässen Zusammensetzungen Verwendung finden, handelt es sich um Verbindungen, die im Mittel mehr als eine 1,2-Epoxidgruppe im Molekül besitzen. Der Begriff "flüssiges oder halbfestes Epoxidharz" ist dem Fachmann auf dem Gebiet der Epoxidharze an sich bekannt.

Solche Harze können eine aliphatische, aromatische, cycloaliphatische, araliphatische oder heterocyclische Struktur haben; sie enthalten Epoxidgruppen als Seitengruppen oder diese Gruppen bilden einen Teil eines alicyclischen oder heterocyclischen Ringsystems. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidharze dieser Typen sind allgemein bekannt und im Handel erhältlich.

Bevorzugte Epoxidharze enthalten wenigstens zwei Reste der Formel I 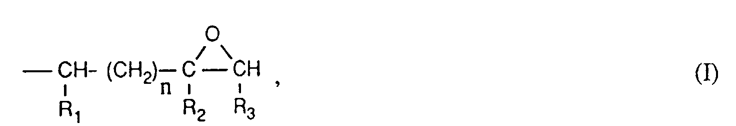 wobei diese Reste direkt an Sauerstoff-, Stickstoff- oder Schwefelatome gebunden sind, worin R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist.

### Beispielhaft für Epoxidharze dieses Typs wären zu erwähnen:

I) Polyglycidyl- und Poly-(β-methylglycidyl)-ester erhältlich durch Umsetzung einer Verbindung mit mindestens zwei Carboxylgruppen im Molekül und Epichlorhydrin bzw. Glycerindichlorhydrin bzw. β-Methyl-epichlorhydrin. Die Umsetzung erfolgt zweckmässig in der Gegenwart von Basen.

Als Verbindungen mit mindestens zwei Carboxylgruppen im Molekül können aliphatische Polycarbonsäuren verwendet werden. Beispiele für diese Polycarbonsäuren sind Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure, Trimellitsäure oder Pyromellitsäure.

Ebenfalls können auch carboxylterminierte Addukte, z.B. von Trimellitsäure und Polyolen, wie beispielsweise Glycerin oder 2,2-Bis-(4-hydroxycyclohexyl)-propan verwendet werden.

II) Polyglycidyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylengykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen.

Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan oder auf unter sauren Bedingungen erhaltene Kondensationsprodukte von Phenolen mit Formaldehyd wie Phenol-Novolake.

III) Poly-(N-glycidyl)-Verbindungen sind beispielsweise erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, Toluidin, n-Butylamin, Bis-(4-aminophenyl)-methan, m-Xylylendiamin oder Bis-(4-methylaminophenyl)-methan.

Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.

IV) Beispiele für Poly-(S-glycidyl)-Verbindungen sind Di-S-glycidylderivate, die sich von Dithiolen, wie beispielsweise Ethan-1,2-dithiol oder Bis-(4-mercaptomethylphenyl)-ether ableiten.

V) Beispiele für Epoxidharze mit einem Rest der Formel I, worin R₁ und R₃ zusammen -CH₂-CH₂- bedeuten und n 0 ist, sind Bis-(2,3-epoxicyclopentyl)-ether, 2,3-Epoxicyclopentylglycidylether oder 1,2-Bis-(2,3-epoxicyclopentyloxy)-ethan. Ein Epoxidharz mit einem Rest der Formel I, worin R₁ und R₃ zusammen -CH₂-CH₂- sind und n 1 bedeutet, ist beispielsweise 3,4-Epoxi-6-methyl-cyclohexancarbonsäure-(3',4'-epoxi-6'-methyl-cyclohexyl)-methylester.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)propan.

Ferner sind auch flüssige vorreagierte Addukte solcher Epoxidharze mit Härtern für Epoxidharze geeignet.

Falls gewünscht, kann eine Mischung von Epoxidharzen in den erfindungsgemässen Zusammensetzungen verwendet werden.

Besonders bevorzugt als Epoxidharze werden Polyglycidylether von Bisphenolen, wie beispielsweise von 2,2-Bis-(4-hydroxyphenyl)-propan oder Bis-(4-hydroxyphenyl)-methan oder von den oben erwähnten aliphatischen Polyolen, insbesondere 1,1,1-Trimethylolpropan und Bistrimethylolpropan. Ebenfalls bevorzugt als Epoxidharze werden die Diglycidylester der oben erwähnten Dicarbonsäuren, insbesondere Hexahydrophthalsäure, sowie der Triglycidylester von Trimellitsäure. Als Epoxidharz auf cycloolefinischer Basis wird 3,4-Epoxi-6-methyl-cyclohexancarbonsäure-(3',4'-epoxi-6'-methyl-cyclohexyl)-methylester besonders bevorzugt

Die festen kolloidalen Kondensationspolymere aus Harnstoff oder Melamin und Formaldehyd mit einem Porenvolumen von grösser als 1 cm³/g und einer spezifischen Oberfläche von grösser als 5 m²/g, die in den erfindungsgemässen Zusammensetzungen Verwendung finden, und deren Herstellung sind in Makromol. Chem. **120**, 68 (1968) und in Makromol. Chem. **149**, 1 (1971) beschrieben.

Bevorzugt sind solche Kondensationspolymere, die ein Porenvolumen von grösser als 2 cm³/g haben.

Besonders bevorzugt sind Harnstoff-Formaldehyd-Kondensationspolymere.

Methoden zur Bestimmung des Porenvolumens und der spezifischen Oberfläche sind dem Fachmann allgemein bekannt. So kann das Porenvolumen beispielweise mit der Quecksilber-Porosimetrie bestimmt werden. Die spezifische Oberfläche kann beispielsweise mit einer modifizierten BET-Adsorption von Stickstoff nach der Methode von Haul und Dümbgen (Chem.-Ing.-Techn. **35**, 586 (1963)) ermittelt werden.

Bevorzugt sind Zusammensetzungen, in denen das Gewichtsverhältnis von Komponente A zu Komponente B 1,5 - 0,8 : 1 ist.

Die Herstellung der erfindungsgemässen Zusammensetzungen erfolgt im allgemeinen so, dass die Komponente A in die aufgewirbelte oder gerührte Komponente B eingespritzt, eingedüst oder eingetropft wird. Bevorzugt wird die Komponente A in einer solchen relativen Menge eingetragen, dass die Erweichungstemperatur der erfindungsgemässen Zusammensetzungen oberhalb von 100 °C verbleibt.

Ist die Viskosität der Komponente A für die genannten Eintragsarten zu hoch, so kann diese mit einem geeigneten Lösungsmittel verdünnt werden, welches während des Eintrags, insbesondere im Vakuum, entfernt wird. So können beispielsweise Epoxidharze mit einer Viskosität von grösser als 10 Pa·s in aliphatischen Estern, aliphatischen Ketonen, aromatischen Kohlenwasserstoffen oder Chlorkohlenwasserstoffen, die einen Siedepunkt von kleiner als 150 °C haben, oder in Epichlorhydrin, wie es bei der Herstellung des Epoxidharzes anfällt, gelöst werden.

Es war nicht vorauszusehen, dass gemäss vorliegender Erfindung frei fliessende, nicht klebende und nicht zusammenbackende Pulver erhalten werden, welche die Verwendung von an sich flüssigen Epoxidharzen beispielsweise in der Pulverlack- und Pressmassentechnologie sowie die Verwendung als Klebstoffe und Giessharze gestattet.

Die erfindungsgemässen Zusammensetzungen können zur Herstellung gehärteter Produkte mit geeigneten Härtern, die dem Fachmann an sich bekannt sind, versetzt und bei Temperaturen von 100-250 °C ausgehärtet werden.

Gegenstand der vorliegenden Erfindung ist weiterhin die Verwendung der erfindungsgemässen Zusammensetzungen für den Oberflächenschutz.

In den folgenden Beispielen sind einige bevorzugte Ausführungsformen der vorliegenden Erfindung beschrieben.

### I. Herstellung der verfestigten Epoxidharze

### Beispiel 1:

In einem IKA-Laborreaktor RW-20 der Fa. Jahnke & Kunkel werden 30 g ein bei 120 °C vorgetrocknetes Harnstoff-Formaldehyd-Kondensationspolymeres (Pergopak® M 2; Fa. Martinswerk) mit 135 rpm gerührt. In dieses fluide Pulver werden im Verlauf von 10 min 34, 85 g (30 ml) eines Tetraglycidylethers von Bistrimethylolpropan (Epoxidgruppengehalt von 6,60 eq/kg; Viskosität von 590 mPa·s bei 25 °C) eingetropft. Es werden 64,85 g eines frei fliessenden Pulvers erhalten, welches einen Epoxidgruppengehalt von 3,70 eq/kg und einen Erweichungspunkt (gemessen auf einer Koflerbank) von 195 °C hat.

### Beispiel 2:

In der gleichen Apparatur wie in Beispiel 1 werden 30 g Pergopak® M 2 und 34,85 g Trimethylolpropan-triglycidylether (Epoxidgruppengehalt von 8,25 eq/kg; Viskosität von 55 mPa·s bei 25 °C) vermischt. Es werden 64,85 g eines frei fliessenden Pulvers erhalten, welches einen Epoxidgruppengehalt von 4,50 eq/kg und einen Erweichungspunkt (gemessen auf einer Koflerbank) von 185 °C hat.

### Beispiel 3:

30 g Pergopak® M werden wie in Beispiel 1 mit 30 g eines Epoxidharzes auf Cycloolefinbasis (Epoxidgruppengehalt von 7,13 eq/kg, Viskosität von 365 mPa·s bei 25 °C) vermischt. Es werden 60 g eines frei fliessenden Pulvers erhalten, welches einen Epoxidgruppengehalt von 3,60 eq/kg und einen Erweichungspunkt (gemessen auf einer Koflerbank) von 190 °C hat.

### Beispiel 4:

30 g Pergopak® M werden wie in Beispiel 1 mit 30 g eines Epoxidharzes auf der Basis eines cycloaliphatischen Diglycidylesters (Epoxidgruppengehalt von 5,91 eq/kg, Viskosität von 850 mPa·s bei 25 °C) vermischt. Es werden 60 g eines frei fliessenden Pulvers erhalten, welches einen Epoxidgruppengehalt von 2,93 eq/kg und einen Erweichungspunkt (gemessen auf einer Koflerbank) von 190 °C hat.

### Beispiel 5:

30 g Pergopak® M werden wie in Beispiel 1 mit 30 g eines Epoxidharzes auf der Basis eines Sorbitdiglycidylethers (Epoxidgruppengehalt von 5,80 eq/kg, Viskosität von 2.0 Pa·s bei 25 °C) vermischt. Es werden 60 g eines frei fliessenden Pulvers erhalten, welches einen Epoxidgruppengehalt von 2,62 eq/kg und einen Erweichungspunkt (gemessen auf einer Koflerbank) von 190 °C hat.

### Beispiel 6:

30 g Pergopak® M werden wie in Beispiel 1 mit 30 g eines Epoxidharzes auf der Basis von epoxidiertem Sojabohnenöl (Epoxidgruppengehalt von 4,3 eq/kg, Viskosität von 600 mPa·s bei 25 °C) vermischt. Es werden 60 g eines frei fliessenden Pulvers erhalten, welches einen Epoxidgruppengehalt von 2,15 eq/kg und einen Erweichungspunkt (gemessen auf einer Koflerbank) von 190 °C hat.

### Beispiel 7:

Es werden 30 g eines Epoxidharzes auf Bisphenol A-Basis (Epoxidgruppengehalt von 5,33 eq/kg, Viskosität von 7,5 Pa·s bei 25 °C) in 50 ml 2-Butanon gelöst. Diese Lösung wird bei 40 °C und 2400 Pa in einen Rotationsverdampfer, in dem sich 30 g Pergopak® M befinden, eingezogen und anschliesssend 1 Stunde bei 40 °C und 2400 Pa gehalten. Es werden 60 g eines frei fliessenden Pulvers erhalten, welches einen Epoxidgruppengehalt von 2,56 eq/kg und einen Erweichungspunkt (gemessen auf einer Koflerbank) von 190 °C hat.

### Beispiel 8:

Es wird wie in Beispiel 7 verfahren und zu 30 g Pergopak® M eine Lösung von 30 g des Tetraglycidylethers von 2,2',6,6'-Tetramethylolcyclohexanol (hergestellt gemäss Beispiel 2 von EP-A 135 477) in 50 ml 2-Butanon zugegeben. Es werden 60 g eines frei fliessenden Pulvers erhalten, welches einen Epoxidgruppengehalt von 3,34 eq/kg und einen Erweichungspunkt (gemessen auf einer Koflerbank) von 180 °C hat.

### Beispiel 9:

In der gleichen Apparatur wie in Beispiel 1 werden 25,7 g eines kolloidalen Melamin-Formaldehydpolymeren (spez. Oberfläche 253 m²/g) mit 34,4 g eines Epoxidharzes auf Cycloolefinbasis (Epoxidgruppengehalt von 7,13 eq/kg, Viskosität von 365 mPa·s bei 25 °C) vermischt. Es werden 60 g eines frei fliessenden Pulvers erhalten, welches einen Epoxidgruppengehalt von 4,8 eq/kg und einen Erweichungspunkt (gemessen auf einer Koflerbank) von 190 °C hat.

### Beispiel 10:

Es wird wie in Beispiel 7 verfahren und zu 30 g Pergopak® M eine Lösung von 98 g des Triglycidylesters von Trimellitsäure (hergestellt gemäss Beispiel 15 von DE 16 43 777) in 1000 ml Essigsäureethylester zugegeben. Es werden 128 g eines frei fliessenden Pulvers erhalten, welches einen Epoxidgruppengehalt von 4,42 eq/kg und einen Erweichungspunkt (gemessen auf einer Koflerbank) von 200 °C hat.

### II. 1. Herstellung von Pulverlacken

Komponeten:
- Pulver gemäss den Beispielen 1, 3, 5, 7, 8 und 10.
- fester, carboxylgruppenendständiger gesättigter Polyester (Uralac® P 2400 der Fa. Scado, Säuregehalt: 0,6 eq/kg; Uralac® P 3400 der Fa. Scado, Säuregehalt: 0,6 eq/kg; Arakote® der Fa. Ciba-Geigy Säuregehalt: 1,34 eq/kg).
- Beschleuniger: Gemisch aus 12,5 Gewichtsteilen Alkyl-trimethyl-amoniumbromid (Morpan® CHSA der Fa. ABM Chemicals) und 87,5 Gewichtsteilen eines festen, gesättigten, carboxylgruppenhaltigen Polyesterharzes (Neoxit® TPC 83 der Fa. Savid)

Die Komponeten (siehe Tabelle 1) werden gemeinsam während 30 Sekunden in einer Analysenmühle gemahlen. Danach wird das Pulvergemisch auf ein gereinigtes Aluminiumblech aufgetragen und zwischen 30 - 60 Minuten bei 180 °C gehärtet. Der entstandene Lackfilm hat eine Dicke von 40 - 60 µm.

### II.2. Herstellung von Giessharzen

Es werden 52 g eines Pulvers gemäss Beispiel 4 mit 66,1 g eines Epoxidharzes auf Cycloolefinbasis (Epoxidgruppengehalt von 7,13 eq/kg, Viskosität von 365 mPa·s bei 25 °C), 81,9 g eines Härters auf der Basis von Methyl-Nadicanhydrid und 0,2 g eines Beschleunigers auf der Basis von 1-Methyl-imidazol vermischt, in Stahlformen [(150 × 150 × 4) mm] gegossen und während 2 Stunden bei 120 °C, 2 Stunden bei 150 °C und 2 Stunden bei 180 °C gehärtet. Es werden weisse Platten erhalten.

### II.3. Herstellung von Verklebungen

Mit dem in II.2 beschriebenen Giessharz werden Anricorrodal-Bleche verklebt und wie in II.2 ausgehärtet.

### III. Prüfung der technischen Eipenschaften

In Tabelle 2 sind die lacktechnischen Eigenschaften der Pulverlacke zusammengestellt.

In Tabelle 3 sind die technischen Eigenschaften der Gussteile zusammengestellt.

Die Zugscherfestigkeit der Verklebungen wird gemäss DIN 53283 bestimmt. Von 5 Proben wird ein Mittelwert von 12,6 N/mm² erhalten.

**Tabelle 1:**

| Formulierung | A | B | C | D | E | F |
|---|---|---|---|---|---|---|
| Pulver (aus Bsp. 1) | 2,00 | | | | | |
| Pulver (aus Bsp. 3) | | 3,06 | | | | |
| Pulver (aus Bsp. 5) | | | 2,04 | | | |
| Pulver (aus Bsp. 7) | | | | 2,08 | | |
| Pulver (aus Bsp. 8) | | | | | 3,29 | |
| Pulver (aus Bsp. 10) | | | | | | 1,20 |
| Uralac P 2400 | - | - | - | - | - | 8,80 |
| Uralac P 3400 | 12,10 | - | 7,96 | 7,92 | - | - |
| Arakote 3003 | - | 7,46 | - | - | 7,46 | - |
| Beschleuniger | 0,28 | - | - | 0,30 | - | - |

**Tabelle 2:**

| Eigenschaften | Pulverlack | | | | | |
|---|---|---|---|---|---|---|
| | A | B | C | D | E | F |
| Gelierzeit (s) | 205 | 50 | 470 | 260 | 34 | 188 |
| Härtung (180 °C, min) | 45 | 30 | 60 | 30 | 30 | 30 |
| Schlagrevers (cm·kg) | 180 | 150 | 180 | 180 | 180 | 180 |
| Erichsentiefung (DIN 53156, mm) | 10 | 9,6 | 9,4 | 9,6 | 10 | 10 |
| Acetontest (Note) | 3-4 | 3 | 3 | 4 | 3 | 3 |
| Haftung (Gitterschnitt, Note) | 0 | 0 | 0 | 0 | 0 | 0 |
| Härte König (s) | 213 | 193 | 188 | 182 | 78 | 213 |

**Tabelle 3:**

| Eigenschaften | |
|---|---|
| Schlagbiegefestigkeit (DIN 53453) | (11,48 ± 1,18) kJ/m² |
| Biegefestigkeit (DIN 53452) | (81 ± 6) N/mm² |
| Formbeständigkeit in der Wärme (ISO 75) | 165 °C |
| Spez. Widerstand (DIN 53482) | 2,3 · 10¹⁶ Ω·cm |
| Oberflächenwiderstand (IEC 167) | 9,3 · 10¹² Ω |
| Wasseraufnahme nach 4 d (25°C) | 0,92 % |
| Wasseraufnahme nach 1 h (100 °C) | 0,65 % |

## Patentansprüche

1. Pulverförmige, frei fliessende Zusammensetzungen bestehend aus
A) flüssigen oder halbfesten Epoxidharzen und
B) festen kolloidalen Kondensationspolymeren aus Harnstoff oder Melamin und Formaldehyd mit einem Porenvolumen von grösser als 1 cm³/g und einer spezifischen Oberfläche von grösser als 5 m²/g, wobei das Gewichtsverhältnis von Komponente A zu Komponente B 3,5 - 0,6 : 1 ist.

2. Zusammensetzungen gemäss Anspruch 1, dadurch gekennzeichnet, dass Komponente A ein Epoxidharz mit einem Erweichungspunkt unterhalb von 40 °C ist

3. Zusammensetzungen gemäss Anspruch 1, dadurch gekennzeichnet, dass Komponente B ein Porenvolumen von grösser als 2 cm³/g hat.

4. Zusammensetzungen gemäss Anspruch 1, dadurch gekennzeichnet, dass die Komponente B ein Harnstoff-Formaldehydpolymer ist.

5. Zusammensetzungen gemäss Anspruch 1, dadurch gekennzeichnet, dass das Gewichtsverhältnis von Komponente A zu Komponente B 1,5 - 0,8 : 1 ist.

6. Verwendung der Zusammensetzungen gemäss Anspruch 1 für den Oberflächenschutz.

## Claims

1. A pulverulent free-flowing composition consisting of
A) liquid or semi-solid epoxy resins and
B) solid colloidal condensation polymers of urea or melamine and formaldehyde having a pore volume greater than 1 cm³/g and a specific surface area greater than 5 m²/g, where the weight ratio of component A to component B is 3.5 - 0.6 : 1.

2. A composition according to claim 1, wherein component A is an epoxy resin having a softening point below 40°C.

3. A composition according to claim 1, wherein component B has a pore volume greater than 2 cm³/g.

4. A composition according to claim 1, wherein component B is a urea/formaldehyde polymer.

5. A composition according to claim 1, wherein the weight ratio of component A to component B is 1.5 - 0.8 : 1.

6. Use of a composition according to claim 1 for surface protection.

## Revendications

1. Compositions en poudre, à écoulement libre, constituées
A) de résines époxydes liquides ou semi-solides, et
B) de polymères de condensation colloïdaux solides, à base d'urée ou de mélamine et de formaldéhyde, ayant un volume de pores supérieur à 1 cm³/g et une aire spécifique supérieure à 5 m²/g, le rapport pondéral du constituant A au constituant B étant de 3,5-0,6:1.

2. Compositions selon la revendication 1, caractérisées en ce que le constituant A est une résine époxyde ayant un point de ramollissement inférieur à 40°C.

3. Compositions selon la revendication 1, caractérisées en ce que le constituant B a un volume de pores supérieur à 2 cm³/g.

4. Compositions selon la revendication 1, caractérisées en ce que le constituant B est un polymère urée-formaldéhyde.

5. Compositions selon la revendication 1, caractérisées en ce que le rapport pondéral du constituant A au constituant B est de 1,5 à 0,8:1.

6. Utilisation des compositions selon la revendication 1 pour la protection des surfaces.
